# EUROPEAN PATENT APPLICATION

(11) **EP 3 952 324 A1**
(43) Date of publication of application: **09.02.2022**
(21) Application number: 20809999.4
(22) Date of filing: 13.05.2020
(51) Int. Cl.: H04Q 11/00

(54) **INTERFACE UPGRADING METHOD AND APPARATUS, AND OPTICAL NETWORK UNIT MANAGEMENT METHOD AND APPARATUS**

(30) Priority: 17.05.2019 CN 201910414493
(71) Applicant: ZTE Corporation, Shenzhen, Guangdong 518057 (CN)
(72) Inventor: YUAN, Liquan, Shenzhen, Guangdong 518057 (CN); LI, Yufeng, Shenzhen, Guangdong 518057 (CN); XIE, Yu, Shenzhen, Guangdong 518057 (CN)
(74) Representative: Canzler & Bergmeier Patentanwälte Partnerschaft mbB
(86) International application number: PCT/CN2020/089992
(87) International publication number: WO 2020/233465

(57) **Abstract**

Disclosed are an interface upgrading method and apparatus, and an optical network unit management method and apparatus, comprising: a server obtains upgrade information used for upgrading an optical network unit management control interface (OMCI); and upgrade a virtual OMCI corresponding to the upgrade information in at least one virtual OMCI. The present application obtains the upgrade information used for upgrading the OMCI, and upgrades the virtual OMCI corresponding to the upgrade information, and thus realizes the separate upgrade of the OMCI, and reduces the workload of upgrade.

## Description

### TECHNICAL FIELD

The present disclosure relates to, but is not limited to, the technical field of communications.

### BACKGROUND

A management platform communicates with an Optical Line Terminal (OLT) according to a management protocol, so as to enable the OLT to manage related functions of Passive Optical Network (PON) of an Optical Network Unit (ONU) with an Optical Network Unit Management Control Interface (OMCI) of the OLT and an ONU Management Control Channel (OMCC) between the OLT and the ONU

In the related art, software of the OMCI performing a management function and software performing other functions form one software package in the OLT. The management function of the OMCI has been continuously improved, but the software of the OMCI in the software package of the OLT cannot be individually upgraded, and the whole software package of the OLT has to be upgraded while the software of the OMCI is being upgraded. Since the OMCI cannot be upgraded individually, a workload of the upgrade is increased and a problem of restarting the OLT to load the software is raised.

### SUMMARY

Embodiments of the present disclosure provide an interface upgrading method and device, and a management method and device for ONU, which can realize individual upgrading of an OMCI, reduce an upgrade workload and avoid restarting an OLT to load software.

An embodiment of the present disclosure provides an interface upgrading method, including: acquiring, by a server, upgrade information for upgrading an OMCI; and upgrading, by the server, a virtual OMCI corresponding to the upgrade information among at least one virtual OMCI.

An embodiment of the present disclosure further provides a management method for ONU, including: generating, by a server, first OMCI information carrying an ONU identifier by using at least one virtual OMCI; encapsulating, by the server, the first OMCI information carrying the ONU identifier according to a management protocol to obtain target information; and transmitting the target information by the server to an OLT.

An embodiment of the present disclosure further provides a management method for ONU, including: receiving, by an OLT, target information from a server, with the server encapsulating first OMCI information carrying an ONU identifier according to a management protocol to obtain the target information and generating the first OMCI information carrying the ONU identifier by using at least one virtual OMCI; decapsulating, by the OLT, the target information according to the management protocol to obtain the first OMCI information carrying the ONU identifier; and transmitting, by the OLT, the first OMCI information to an ONU corresponding to the ONU identifier to manage the ONU

An embodiment of the present disclosure further provides a server, including: an acquisition module configured to acquire upgrade information for upgrading an OMCI; and a first processing module configured to upgrade a virtual OMCI corresponding to the upgrade information among at least one virtual OMCI.

An embodiment of the present disclosure further provides a server, including: a second processing module configured to generate first OMCI information carrying an ONU identifier by using at least one virtual OMCI, and encapsulate the first OMCI information carrying the ONU identifier according to a management protocol to obtain target information; and a first transmitting module configured to transmit the target information to an OLT.

An embodiment of the present disclosure further provides an OLT, including: a first receiving module configured to receive target information from a server, with the server encapsulating first OMCI information carrying an ONU identifier according to a management protocol to obtain the target information and generating the first OMCI information carrying the ONU identifier by using at least one virtual OMCI; a third processing module configured to decapsulate the target information according to the management protocol to obtain the first OMCI information carrying the ONU identifier; and a second transmitting module configured to transmit the first OMCI information to an ONU corresponding to the ONU identifier to manage the ONU

### BRIEF DESCRIPTION OF THE DRAWINGS

The accompanying drawings are intended to provide a further understanding of the technical solutions in the embodiments of the present disclosure and constitute a part of the specification. Together with the embodiments of the present disclosure, the drawings are used to explain the technical solutions in the embodiments of the present disclosure, but do not constitute improper limitation to the technical solutions.
Fig. 1 is a flowchart illustrating an interface upgrading method according to the present disclosure;
Fig. 2 is a schematic structural diagram of a system for configuring an OMCI according to the present disclosure;
Fig. 3 is another schematic structural diagram of a system for configuring an OMCI according to the present disclosure;
Fig. 4 is a flowchart illustrating a management method for ONU according to the present disclosure;
Fig. 5 is a schematic structural diagram of a system for configuring an OMCI in the related art;
Fig. 6 is still another schematic structural diagram of a system for configuring an OMCI according to the present disclosure;
Fig. 7 is yet another schematic structural diagram of a system for configuring an OMCI according to the present disclosure;
Fig. 8 is another flowchart illustrating a management method for ONU according to the present disclosure;
Fig. 9 is a schematic structural diagram of a server according to the present disclosure;
Fig. 10 is another schematic structural diagram of a server according to the present disclosure; and
Fig. 11 is a schematic structural diagram of an OLT according to the present disclosure.

### DETAILED DESCRIPTION

In order to make the objectives, technical solutions and advantages of the embodiments of the present disclosure clearer, the embodiments of the present disclosure are further described in detail below in conjunction with the drawings. It should be noted that the embodiments described herein and the features therein can be arbitrarily combined with one another if no conflict is incurred.

The steps illustrated in the flowcharts of the drawings may be performed in a computer system such as a set of computer-executable instructions. In addition, although a logical order is illustrated in the flowchart, the steps illustrated or described may be performed in an order different from that described herein in some cases.

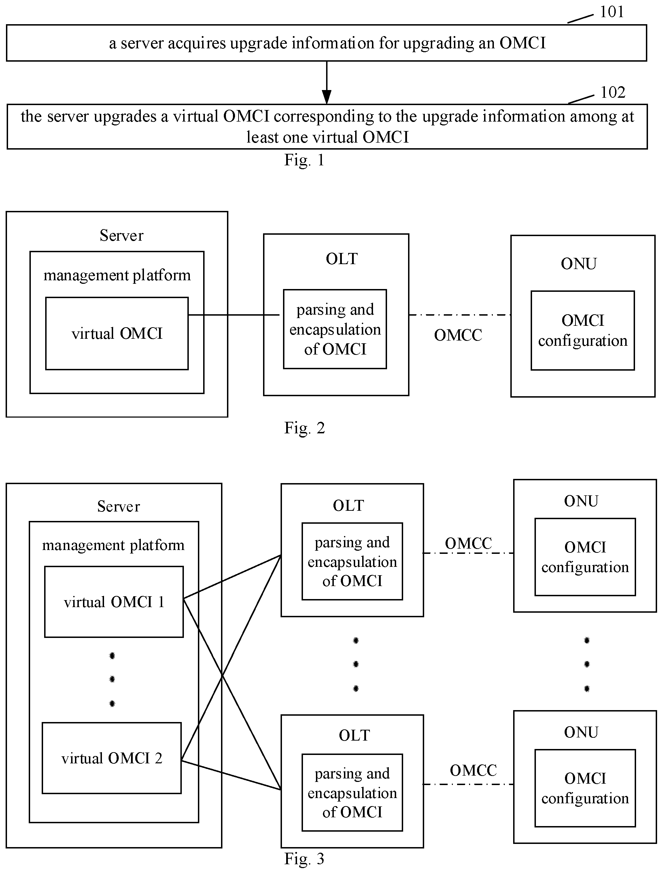

The present disclosure provides an interface upgrading method. As shown in Fig. 1, the method includes steps 101 and 102.

At the step 101, a server acquires upgrade information for upgrading an OMCI.

At the step 102, the server upgrades a virtual OMCI corresponding to the upgrade information among at least one virtual OMCI.

In an example, the at least one virtual OMCI is located in the server.

In an example, as shown in Fig. 2, a management platform is built on the server, the management platform virtualizes an OMCI in an OLT to obtain a virtual OMCI functional module or entity capable of generating management information in accordance with an OMCI information format, and the management platform may further include other management functions, such as related functions for configuring the OLT.

In an example, the server virtualizes an OMCI in at least one OLT by taking a single OMCI as a unit to obtain the at least one virtual OMCI, that is, each OMCI in the OLT is virtualized as a whole.

In an example, the server virtualizes the OMCI in the at least one OLT in a preset manner to obtain the at least one virtual OMCI, and the preset manner includes at least one of a manner according to a type of a virtual operator of the OLT, a manner according to a user type of the OLT and a manner according to a type of a function performed by the OLT.

In an example, a management platform is built on the server, and the management platform may virtualize the OMCI in the at least one OLT according to the type of the function performed by the OLT, so as to allow one virtual OMCI functional module or entity to correspond to one function. For example, the functions performed by the at least one OLT include PON-related management, multicast management and Digital Subscriber Line (DSL) configuration, and the server virtualizes the OMCI in the OLT according to the types of the functions performed by the OLT to obtain three virtual OMCI functional modules or entities. The management platform may also virtualize the OMCI in the OLT according to the type of the virtual operator of the at least one OLT, so as to allow one virtual OMCI functional module or entity to correspond to one virtual operator. For example, the OLT supports three virtual operators, and the server virtualizes the OMCI in the OLT according to the types of the virtual operators of the OLT to obtain three virtual OMCI functional modules or entities. Moreover, the management platform may virtualize the OMCI in the OLT according to the user type of the at least one OLT, so as to allow one virtual OMCI functional module or entity to correspond to one type of users. For example, the users of the OLT include business users and home users, and the server virtualizes the OMCI in the OLT according to the user types of the OLT to obtain two virtual OMCI functional modules or entities.

That is, if only one OMCI is provided, the management platform may virtualize the OMCI to obtain one virtual OMCI functional module or entity; or may virtualize the OMCI to obtain a plurality of virtual OMCI functional modules or entities. As shown in Fig. 3, if more than one OMCI is provided, the management platform may virtualize the OMCIs by taking a single OMCI as a unit to obtain virtual OMCIs in the same number as the OMCIs, or may virtualize the OMCIs according to the type of the virtual operator of the OLT and/or the user type of the OLT and/or the type of the function performed by the OLT to obtain several virtual OMCIs. One or more logical or physical connections are established between the management platform and the OLT.

With the interface upgrading method provided by the present disclosure, the server directly upgrades the virtual OMCI corresponding to the upgrade information among the at least one virtual OMCI after acquiring the upgrade information for upgrading the OMCI, so that the OMCI can be individually upgraded, which reduces the workload of the upgrade, and overcomes the problem of restarting the OLT to load the software.

In an example, since the server virtualizes the OMCI in the OLT, OMCI information is generated by the server instead of the OLT, which is different from the case in the related art.

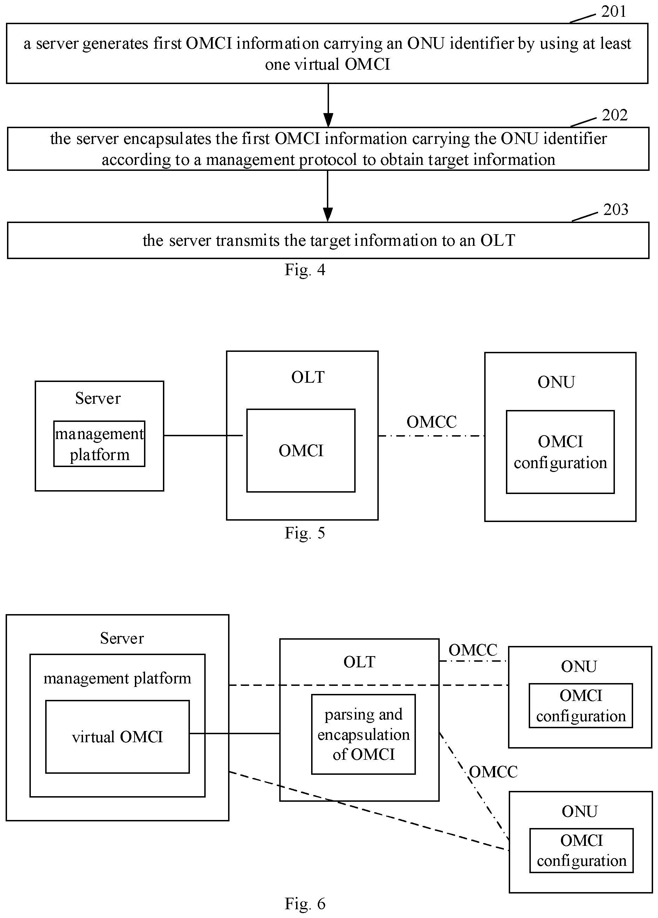

The present disclosure further provides a management method for ONU. As shown in Fig. 4, the method includes steps 201 to 203.

At the step 201, a server generates first OMCI information carrying an ONU identifier by using at least one virtual OMCI.

At the step 202, the server encapsulates the first OMCI information carrying the ONU identifier according to a management protocol to obtain target information.

In an example, the management protocol includes: a network configuration (NETCONF) management protocol based on extensible markup language and Simple Network Management Protocol (SNMP). When more than one logical or physical connection is established between a management platform and an OLT, each connection may use the NETCONF management protocol to carry OMCI information, or use other management protocols, such as the SNMP, to carry the OMCI information,.

At the step 203, the server transmits the target information to an OLT.

In an example, the server transmits the target information to the OLT, the OLT decapsulates the target information to obtain the first OMCI information carrying the ONU identifier, and then the OLT transmits the first OMCI information to an ONU corresponding to the ONU identifier to manage the ONU

In an example, a management platform is built on the server. The management platform generates OMCI information capable of being directly executed by an ONU and transmits the information to the OLT according to a management protocol between the management platform and the OLT, and the OLT parses out the OMCI information and then transmits the information directly to the ONU to which the information needs to be transmitted, without processing the information. That is, although the OMCI information from the management platform is transmitted to the ONU after being processed by the OLT, the processing by the OLT here is just to parse out to which ONU the information needs to be transmitted, and the OLT does not create the OMCI information and just transmits the OMCI information from the management platform to a connection channel established between the OLT and the ONU. It is different from that in the related art shown in Fig. 5. As shown in Fig. 5, the management information transmitted by the management platform to the OLT is not the OMCI information, and the OLT uses an OMCI thereof to convert the received management information into the OMCI information. For example, the management platform transmits SNMP information to the OLT, the OLT receives the SNMP information, extracts management information from the SNMP information and converts the management information into the OMCI information, and then the OLT transmits the OMCI information to the ONU

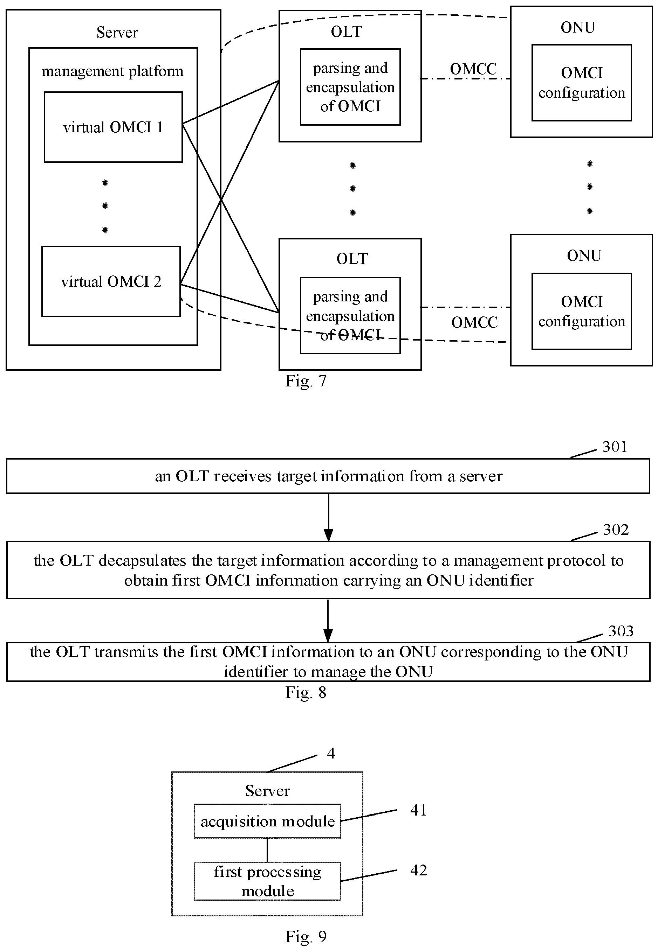

In an example, the management platform is built on the server, and the OMCI information, which is transmitted from the management platform, processed by the OLT and then transmitted to the ONU, is PON-related management information. As shown in Fig. 6, the OLT establishes a direct management channel (shown by dotted lines) from the ONUs to the management platform, and transmits other OMCI management information (i.e., the OMCI management information except for the PON-related OMCI management information) to the ONUs through the direct management channels, in which case the OLT only forwards the management information from the management platform to the ONU without parsing the information. The direct management channels between the management platform and the ONUs may carry the OMCI information according to the NETCONF management protocol or other management protocols, such as a communication protocol TR-069. Fig. 7 is a configuration diagram illustrating a case where the management platform includes a plurality of virtual OMCI functional modules or entities.

In an example, before transmitting the OMCI information, the management platform may choose to transmit all the OMCI information to the OLT, and the OLT transmits the OMCI information to the ONU after parsing the information; or the management platform may choose to divide the OMCI information into two parts, one part, which includes configuration information related to a PON layer and other information such as an IP address, is transmitted to the OLT and then is transmitted by the OLT to the ONU, and the other part is transmitted to the ONU by establishing a direct connection with the ONU and used for directly configuring the ONU

In an example, after the server transmits the target information to the OLT, the management method for ONU may further include: receiving, by the server, receipt confirmation information for the target information from the OLT.

In an example, before or after the server generates the first OMCI information carrying the ONU identifier by using the at least one virtual OMCI, the management method for ONU may further include: receiving, by the server, encapsulated second OMCI information from the OLT; and decapsulating, by the server, the encapsulated information according to the management protocol to obtain second OMCI information.

With the management method for ONU provided by the present disclosure, the server directly generates the OMCI information by using the virtual OMCI, encapsulates the OMCI information and transmits the OMCI information to the OLT, such that the OLT can obtain the OMCI information capable of being directly transmitted to the ONU for ONU management just by decapsulating the OMCI information, thereby improving ONU management efficiency.

The present disclosure further provides a management method for ONU. As shown in Fig. 8, the method includes steps 301 to 303.

At the step 301, an OLT receives target information from a server.

The server encapsulates first OMCI information carrying an ONU identifier according to a management protocol to obtain the target information, and generates the first OMCI information carrying the ONU identifier by using at least one virtual OMCI.

In an example, the management protocol includes the NETCONF management protocol and the SNMP

At the step 302, the OLT decapsulates the target information according to the management protocol to obtain the first OMCI information carrying the ONU identifier.

At the step 303, the OLT transmits the first OMCI information to an ONU corresponding to the ONU identifier to manage the ONU

In an example, the OLT needs to establish a connection channel with the ONU in advance for carrying the OMCI information. In related standards of Gigabit-Capable Passive Optical Network (GPON), XG-Passive Optical Network (XG-PON) and XG Symmetry-Passive Optical Network (XGS-PON), a channel for carrying OMCI information, that is, an OMCC, is defined as a General Encapsulation Methods (GEM) channel dedicated to carrying OMCI information. The OLT determines to which ONU the information is transmitted after parsing an external package of OMCI management information received from the management platform, and then carries the information in a corresponding GEM channel of the ONU and transmits the information to the ONU

In an example, after the step 301, the management method for ONU may further include: transmitting, by the OLT, receipt confirmation information for the target information to the server.

In an example, such step may be performed before the step 302, or after the step 302 and before the step 303, or after the step 303.

In an example, before or after the OLT receives the target information from the server, the management method for ONU may further include: receiving, by the OLT, second OMCI information from the ONU; encapsulating, by the OLT, the second OMCI information according to the management protocol to obtain encapsulated second OMCI information; and transmitting, by the OLT, the encapsulated second OMCI information to the server.

In an example, a management platform is built on the server. Besides performing encapsulation, the OLT may acquire and record information before the information is transmitted to the management platform or while the information is being transmitted to the management platform. For example, for some important alarm information, the OLT may acquire and record the information before the information is transmitted to the management platform or while the information is being transmitted to the management platform so as to process the information quickly and timely, and transmit the alarm information to the management platform for processing after the information is processed or while the information is being processed, or the OLT may directly transmit the alarm information to the management platform. For general report information, the OLT may directly transmit the information to a virtual OMCI functional module or entity of the management platform. The OLT receives OMCI information transmitted through the GEM channel, encapsulates the information according to the NETCONF management protocol, and transmits the information to the management platform.

With the management method for ONU provided by the present disclosure, since the target information received by the OLT is the OMCI information which is directly generated by a virtual OMCI and encapsulated by the server, the OLT can obtain the OMCI information capable of being directly transmitted to the ONU for ONU management just by decapsulating the OMCI information, thereby improving the ONU management efficiency.

The present disclosure further provides a server. As shown in Fig. 9, a server 4 includes: an acquisition module 41 and a first processing module 42.

The acquisition module 41 is configured to acquire upgrade information for upgrading an OMCI.

The first processing module 42 is configured to upgrade a virtual OMCI corresponding to the upgrade information among at least one virtual OMCI.

In an example, the server virtualizes an OMCI in at least one OLT by taking a single OMCI as a unit to obtain the at least one virtual OMCI.

In an example, the server virtualizes the OMCI in the at least one OLT in a preset manner to obtain the at least one virtual OMCI, and the preset manner includes at least one of a manner according to a type of a virtual operator of the OLT, a manner according to a user type of the OLT and a manner according to a type of a function performed by the OLT.

In an example, the upgrade information includes: OMCI identification information and information to be upgraded.

The first processing module 42 is configured to select the virtual OMCI corresponding to the OMCI identification information from the at least one virtual OMCI, take the selected virtual OMCI as a target virtual OMCI, and upgrade the target virtual OMCI according to the information to be upgraded.

The server provided by the present disclosure can directly upgrade the virtual OMCI corresponding to the upgrade information among the at least one virtual OMCI after acquiring the upgrade information for upgrading the OMCI, so that the OMCI can be individually upgraded, thereby reducing the workload of the upgrade, and overcoming the problem of restarting the OLT to load the software.

In practical applications, each of the acquisition module 41 and the first processing module 42 is implemented by a Central Processing Unit (CPU), a Microprocessor Unit (MPU), a Digital Signal Processor (DSP) or a Field Programmable Gate Array (FPGA) located in the server.

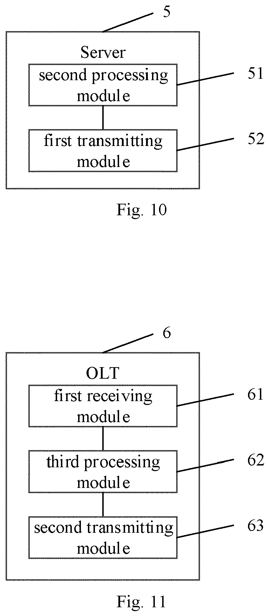

The present disclosure further provides a server. As shown in Fig. 10, a server 5 includes: a second processing module 51 and a first transmitting module 52.

The second processing module 51 is configured to generate first OMCI information carrying an ONU identifier by using at least one virtual OMCI.

The second processing module 51 is further configured to encapsulate the first OMCI information carrying the ONU identifier according to a management protocol to obtain target information.

The first transmitting module 52 is configured to transmit the target information to an OLT.

In an example, the second processing module 51 is further configured to receive encapsulated second OMCI information from the OLT, and decapsulate the encapsulated second OMCI information according to the management protocol to obtain second OMCI information.

In an example, the management protocol includes: a NETCONF management protocol based on extensible markup language and SNMP

The server provided by the present disclosure can directly generate the OMCI information by using the virtual OMCI, encapsulate the OMCI information and then transmit the OMCI information to the OLT, such that the OLT can obtain the OMCI information capable of being directly transmitted to the ONU for ONU management just by decapsulating the OMCI information, thereby improving the ONU management efficiency.

In practical applications, each of the second processing module 51 and the first transmitting module 52 is implemented by a CPU, an MPU, a DSP or an FPGA located in the server.

The present disclosure further provides an OLT. As shown in Fig. 11, an OLT 6 includes: a first receiving module 61, a third processing module 62 and a second transmitting module 63.

The first receiving module 61 is configured to receive target information from a server. The server encapsulates first OMCI information carrying an ONU identifier according to a management protocol to obtain the target information, and generates the first OMCI information carrying the ONU identifier by using at least one virtual OMCI.

The third processing module 62 is configured to decapsulate the target information according to the management protocol to obtain the first OMCI information carrying the ONU identifier.

The second transmitting module 63 is configured to transmit the first OMCI information to an ONU corresponding to the ONU identifier to manage the ONU

In an example, the first receiving module 61 is further configured to receive second OMCI information from the ONU

The third processing module 62 is further configured to encapsulate the second OMCI information according to the management protocol to obtain encapsulated second OMCI information.

The second transmitting module 63 is further configured to transmit the encapsulated second OMCI information to the server.

With the OLT provided by the present disclosure, since the target information received by the OLT is the OMCI information which is directly generated by a virtual OMCI and encapsulated by the server, the OLT can obtain the OMCI information capable of being directly transmitted to the ONU for ONU management just by decapsulating the OMCI information, thereby improving the ONU management efficiency.

In practical applications, each of the first receiving module 61, the third processing module 62 and the second transmitting module 63 is implemented by a CPU, an MPU, a DSP or an FPGA located in the OLT.

The implementations disclosed in the embodiments of the present disclosure are described above, and the description is only intended to facilitate understanding the embodiments of the present disclosure, and is not used to limit the embodiments of the present disclosure. Those of ordinary skill in the field of any embodiment of the present disclosure may make any modification and change to the forms and details of the implementations without departing from the spirit and scope of the embodiments of the present disclosure. The protection scope of the embodiments of the present disclosure is the scope defined by the appended claims.

## Claims

1. An interface upgrading method, comprising:
acquiring, by a server, upgrade information for upgrading an Optical Network Unit Management Control Interface, called OMCI; and
upgrading, by the server, a virtual OMCI corresponding to the upgrade information among at least one virtual OMCI.

2. The upgrading method of claim 1, wherein the server virtualizes an OMCI in at least one Optical Line Terminal, called OLT, by taking a single OMCI as a unit to obtain the at least one virtual OMCI.

3. The upgrading method of claim 1, wherein the server virtualizes an OMCI in at least one OLT in a preset manner to obtain the at least one virtual OMCI, and the preset manner comprises at least one of:
a manner according to a type of a virtual operator of the OLT, a manner according to a user type of the OLT and a manner according to a type of a function performed by the OLT.

4. The upgrading method of claim 2 or 3, wherein the upgrade information comprises: OMCI identification information and information to be upgraded; and
the step of upgrading, by the server, the virtual OMCI corresponding to the upgrade information among the at least one virtual OMCI comprises:
selecting, by the server, the virtual OMCI corresponding to the OMCI identification information from the at least one virtual OMCI, and taking the selected virtual OMCI as a target virtual OMCI; and
upgrading, by the server, the target virtual OMCI according to the information to be upgraded.

5. A management method for Optical Network Unit, called ONU, comprising:
generating, by a server, first OMCI information carrying an ONU identifier by using at least one virtual OMCI;
encapsulating, by the server, the first OMCI information carrying the ONU identifier according to a management protocol to obtain target information; and
transmitting, by the server, the target information to an OLT.

6. The management method of claim 5, wherein before or after the step of generating, by the server, the first OMCI information carrying the ONU identifier by using the at least one virtual OMCI, the method further comprises:
receiving, by the server, encapsulated second OMCI information from the OLT;
and
decapsulating, by the server, the encapsulated second OMCI information according to the management protocol to obtain second OMCI information.

7. The management method of claim 5 or 6, wherein the management protocol comprises: a network configuration management protocol based on extensible markup language, and Simple Network Management Protocol.

8. A management method for ONU, comprising:
receiving, by an OLT, target information from a server, wherein the server encapsulates first OMCI information carrying an ONU identifier according to a management protocol to obtain the target information, and generates the first OMCI information carrying the ONU identifier by using at least one virtual OMCI;
decapsulating, by the OLT, the target information according to the management protocol to obtain the first OMCI information carrying the ONU identifier; and
transmitting, by the OLT, the first OMCI information to an ONU corresponding to the ONU identifier to manage the ONU

9. The management method of claim 8, wherein before or after the step of receiving, by the OLT, the target information from the server, the method further comprises:
receiving, by the OLT, second OMCI information from the ONU;
encapsulating, by the OLT, the second OMCI information according to the management protocol to obtain encapsulated second OMCI information; and
transmitting, by the OLT, the encapsulated second OMCI information to the server.

10. A server, comprising:
an acquisition module configured to acquire upgrade information for upgrading an OMCI; and
a first processing module configured to upgrade a virtual OMCI corresponding to the upgrade information among at least one virtual OMCI.

11. A server, comprising:
a second processing module configured to generate first OMCI information carrying an ONU identifier by using at least one virtual OMCI, and encapsulate the first OMCI information carrying the ONU identifier according to a management protocol to obtain target information; and
a first transmitting module configured to transmit the target information to an OLT.

12. An OLT, comprising:
a first receiving module configured to receive target information from a server, wherein the server encapsulates first OMCI information carrying an ONU identifier according to a management protocol to obtain the target information, and generates the first OMCI information carrying the ONU identifier by using at least one virtual OMCI;
a third processing module configured to decapsulate the target information according to the management protocol to obtain the first OMCI information carrying the ONU identifier; and
a second transmitting module configured to transmit the first OMCI information to an ONU corresponding to the ONU identifier to manage the ONU
